# EUROPÄISCHE PATENTSCHRIFT

(11) **EP 3 218 124 B1**
(45) Veröffentlichungstag und Bekanntmachung des Hinweises auf die Patenterteilung: **15.07.2020**
(21) Anmeldenummer: 15834789.8
(22) Anmeldetag: 13.11.2015
(51) Int. Cl.: B21C 37/00, B21F 45/00

(54) **VERFAHREN UND VORRICHTUNG ZUM DURCHTRENNEN EINES METALLGEWEBESCHLAUCHS, METALLGEWEBESCHLAUCH SOWIE VERWENDUNG EINES DERARTIGEN METALLGEWEBESCHLAUCHS**
METHOD AND DEVICE FOR CUTTING THROUGH A METAL FABRIC TUBE, METAL FABRIC TUBE AND USE OF SUCH A METAL FABRIC TUBE
PROCÉDÉ ET DISPOSITIF POUR SECTIONNER UN TUBE TISSÉ MÉTALLIQUE, TUBE TISSÉ MÉTALLIQUE ET UTILISATION D'UN TUBE TISSÉ MÉTALLIQUE DE CE TYPE

(30) Priorität: 13.11.2014 DE 102014016727; 23.02.2015 DE 102015002113
(43) Veröffentlichungstag der Anmeldung: 20.09.2017
(73) Patentinhaber: Jouhsen - Bündgens Maschinenbau GmbH, 52224 Stolberg (DE)
(72) Erfinder: RENZ, Peter, 52080 Aachen (DE); BOSSERHOFF, Bert, 52222 Stolberg (DE)
(74) Vertreter: Reuther, Martin
(86) Internationale Anmeldenummer: PCT/DE2015/100487
(87) Internationale Veröffentlichungsnummer: WO 2016/074673

(56) Entgegenhaltungen:
- US-A1- 2006 027 010
- US-A1- 2009 082 803

## Beschreibung

Die Erfindung betrifft ein Verfahren zum Durchtrennen eines Metallgewebeschlauchs an einer Trennstelle. Die Erfindung betrifft auch eine Vorrichtung zum Durchtrennen eines Metallgewebeschlauchs. Die Erfindung betrifft ferner einen Metallgewebeschlauch aus mehreren Metallfilamenten. Auch betrifft die Erfindung eine Verwendung eines Metallgewebeschlauchs.

Aus dem Stand der Technik ist es bekannt, gattungsgemäße Metallgewebeschläuche insbesondere zum Herstellen von Stents, also von Gefäßstützen, einzusetzen. Deren Herstellung gestaltet sich jedoch relativ komplex, wie insbesondre auch aus der DE 20 2008 018 523 U1 bekannt, nach welcher an einer Trennstelle das Gewebe vor dem Trennen zunächst mit Klemmen versehen, weich- oder hartgelötet, verschweißt oder anderweitig fixiert werden soll, um dann anschließend den Trennvorgang durchzuführen. Speziell ein Trennen eines langen Metallgewebeschlauchs in einzelne Schlauchteile, welche beispielsweise als Stents verwendet werden können, gestaltet sich als schwierig, so dass an sich eine kostengünstige Herstellung derartiger kürzerer Metallgewebeschläuche ausgeschlossen ist. Hieran ändert auch der Inhalt der DE 10 2007 003 838 A1 nichts, welche eine Vorrichtung und ein Verfahren zum endoskopischen Explantieren oder Kürzen von Stents offenbart, indem die einzelnen Drähte des jeweiligen Stents oder aber eine Gruppe einzelner Drähte innerhalb des Körpers thermisch aufgeschmolzen und hierdurch durchtrennt wird.

Es ist Aufgabe vorliegender Erfindung, eine kostengünstige Herstellung sowie entsprechend kostengünstig hergestellte bzw. herstellbare konfektionierte Metallgewebeschläuche und deren Verwendung bereitzustellen.

Die Aufgabe der Erfindung wird durch ein Verfahren und eine Vorrichtung zum Durchtrennen eines Metallgewebeschlauchs sowie durch einen Metallgewebeschlauch aus mehreren Metallfilamenten und eine Verwendung eines Metallgewebeschlauchs mit den Merkmalen der unabhängigen Ansprüche gelöst. Weitere ggf. auch unabhängig hiervon vorteilhafte Ausgestaltungen finden sich in den Unteransprüchen sowie der nachfolgenden Beschreibung.

So kann sich ein kostengünstiges Verfahren zum Durchtrennen eines Metallgewebeschlauchs an einer Trennstelle dadurch auszeichnen, dass der Metallgewebeschlauch an der Trennstelle thermisch gerissen wird. Bei geeigneter Abstimmung des Reißvorgangs und der thermischen Energie kann die strukturelle Belastung auf den Metallgewebeschlauch derart begrenzt werden, dass die Gewebestruktur des Metallgewebeschlauchs nach dessen Durchtrennen insbesondere an dem Trennbereich bzw. der Trennstelle möglichst gut erhalten bleibt, so dass aufwändige und mithin kostenintensive Nacharbeiten unterbleiben können. An sich ermöglicht diese Vorgehensweise somit auch, Metallgewebeschläuche in großer Länge als Halbzeug zu fertigen, was dementsprechend wirtschaftlich ist, um diese dann anschließend nach Bedarf durch die thermische Trennung, beispielsweise zu Stents, zu konfektionieren.

Thermische Reißverfahren zum Trennen von starren bzw. steifen Halbzeugen oder dergleichen entlang einer Trennstelle in mindestens zwei Teile sind aus dem Stand der Technik bereits bekannt. So ist etwa aus der WO 2006/017664 A1 bzw. aus der WO 2006/017665 A1 ein thermisches Reißen von Material zur Herstellung von Röhrchen bekannt, um auf diese Weise Röhrchen bzw. Kanülen abzutrennen, wobei diese so hergestellte Röhrchen bzw. Kanülen bei diesem Vorgang gegebenenfalls auch noch sich verjüngende Bereiche erhalten können. Jedoch ist dabei das zu reißende Halbzeug derart fest und starr ausgeführt, dass es unproblematisch von außen geklemmt und hierbei erhitzt werden kann, ohne dass die Gefahr besteht, dass selbst ein hohles Halbzeug dabei in sich zusammenfällt.

Bei dem vorliegenden flexiblen Metallgewebeschlauch verhält es sich jedoch signifikant anders, da der flexible Metallgewebeschlauch eine derartige Festigkeit bzw. Starrheit nicht aufweist, so dass es nicht naheliegen kann, auch hier einen Reißvorgang zu initiieren. Auch besteht ein Metallgewebeschlauch, anders als metallische Röhrchen, aus eine Vielzahl von Filamenten, die an sich vereinzelt und sehr dünn ausgestaltet sind und unverbunden nur aufgrund der Gewebestruktur stabilisiert einen Schlauch bilden, so dass das thermische und mechanische Grundverhalten dieser Metallgewebeschläuche nicht dem eines massiven Röhrchens entspricht. Durch eine geeignete Abstimmung der Zugkraft und dem Aufbringen der thermischen Energie ist es jedoch überraschender Weise auch bei Metallgewebeschläuchen möglich, diese thermisch zu reißen, wobei diese Abstimmung je nach Gewebestruktur und Filamenten ohne weiteres durch einfache Versuche ermittelt werden kann.

In Abweichung von der DE 20 2008 018 523 U1 erfolgt durch das thermische Reißen der Trennvorgang vorzugsweise einstufig, ohne dass vor dem eigentlichen Trennen zwingend eine Fixieren des Geflechts, welches im Zweifel den Metallgewebeschlauch auch unnötig versteift, vorgenommen werden muss. Auch erfolgt das Trennen des Metallgewebeschlauchs, anders als bei dem in der DE 20 2008 018 523 U1 offenbarten Schneiden durch das thermische Reißen wesentlich schonender in seinem Einfluss auf den Metallgewebeschlauch.

Bei dem vorliegenden thermischen Reißen wird ein Metallgewebeschlauch derart erwärmt, dass das erwärmte Material des Metallgewebeschlauchs bevorzugt allein durch ein Auseinanderziehen des Metallgewebeschlauchs an der erzeugten Trennstelle in zwei voneinander vollständig getrennte Schlauchteile getrennt werden kann.

Dementsprechend ist es vorteilhaft, dass der Metallgewebeschlauch vorliegend als Ganzes bzw. in einem Schritt an der Trennstelle thermisch gerissen werden kann, so dass dann zwei voneinander vollständig getrennte Schlauchteile vorliegen. Dieses ermöglicht, auch in Abgrenzung zu dem Aufschmelzen einzelner Drähte innerhalb des menschlichen Körpers nach der DE 10 2007 003 838 A1, entsprechend die Herstellung konfektionierter Metallgewebeschläuche in wirtschaftlicher Weise.

Vorliegend ist es bei einer entsprechend gewählten Verfahrensführung sogar möglich, durch das thermische Reißen abgerundete Enden an den getrennten Schlauchteilen zu erzeugen, welche keine oder nur eine vernachlässigbar geringe Nachbearbeitung bedürfen, um insbesondere beispielweise einsatzbereite Stents zu erhalten.

Bevorzugt wird hierbei derart verfahren, dass der Metallgewebeschlauch bzw. die im Ergebnis getrennten Schlauchteile nicht oder nur vernachlässigbar gering einfallen oder einknicken, was eben durch eine geeignete Abstimmung der thermischen und der mechanischen Belastungen erzielt werden kann.

Hervorzuheben ist auch, dass die Wandbereiche des Metallgewebeschlauchs bzw. getrennten Schlauchteile überraschenderweise kaum nennenswert wegknicken. Vielmehr kann der Metallgewebeschlauch bzw. die getrennten Schlauchteile derart voneinander getrennt werden, dass der Metallgewebeschlauch bzw. die getrennten Schlauchteile im Wesentlichen ihre ursprüngliche Querschnittsform beibehalten können, wenn die Verfahrensführung entsprechend gewählt ist.

Besonders sauber und präzise kann der Metallgewebeschlauch thermisch gerissen werden, wenn die thermische Energie durch elektrischen Strom, der durch den Metallgewebeschlauch fliest, aufgebracht wird. Besonders bevorzugt überschreitet der Strom hierbei die Trennstelle, was zur Folge hat, dass über bzw. durch bereits durchtrennte Filamente keine weitere Energie in den Metallgewebeschlauch eingebracht wird, so dass sich die thermische Belastung auf natürliche Weise auf die Filamente beschränkt, die noch nicht durchtrennt sind.

Alternativ kann die thermische Energie auch durch andere Wärme- bzw. Hitzequellen in den Metallgewebeschlauch eingebracht werden, wie beispielsweise mithilfe einer Laserlicht-, einer Verbrennungsflammen-, einer Mikrowellen-, einer Ultraschallwellenquelle oder dergleichen.

Der Metallgewebeschlauch kann mit elektrischen Strom besonders einfach beaufschlagt werden, wenn beidseits der Trennstelle jeweils wenigstens eine Elektrode mit dem Metallgewebeschlauch in Kontakt gebracht und der Strom über die Elektroden durch den Metallgewebeschlauch geleitet wird. Letztendlich kann auch hierdurch eine saubere und präzise Trennung begünstigt werden.

Alternativ könnte der Metallgewebeschlauch zumindest im Bereich der Trennstelle durch ein Induktionsverfahren in geeigneter Weise erhitzt werden.

Es hat sich als besonders vorteilhaft erwiesen, wenn im Bereich der Trennstelle wenigstens zwei Filamente des Metallgewebeschlauchs aufgeschmolzen und miteinander verbunden, vorzugsweise miteinander verschmolzen, werden. Zudem kann hierdurch erzielt werden, dass sich das Gewebe im Bereich der Trennstelle verfestigen kann, und dass insofern die Gefahr eines unbeabsichtigten Auflösens des Gewebes an seinen Enden signifikant reduziert werden kann. Letzteres ist insbesondere bei kurzen Metallgewebeschläuchen, wie beispielsweise bei Stents, von erheblicher Bedeutung, während dieses bei unkonfektionierten Metallgewebeschläuchen als Halbzeug einigermaßen unkritisch ist, da die jeweiligen Enden, die sich ggf. etwas auflösen könnten, prozentual nicht ins Gewicht fallen und in der Regel ohnehin als Ausschuss für Einfädelvorgänge und ähnliches verloren gehen.

Die Durchführung des Verfahrens kann hierbei gezielt derart manipuliert werden, dass an oder in dem Metallgewebeschlauch vorhandene Drähte, Fasern, Filamente oder dergleichen, welche das eigentliche Gewebe des Metallgewebeschlauchs bilden können, durch die Erwärmung miteinander verschweißen oder verkleben.

Durch ein derartiges thermisches Verbinden wenigstens zweier Filamente können die Enden der getrennten Schlauchteile sehr gut gegen ein unerwünschtes Lösen bzw. Ausfranzen von Einzelfilamenten geschützt werden.

Es ist vorliegend förderlich, dass durch den Zug beim Auseinanderreißen des Metallgewebeschlauchs die angeschmolzenen Filamente idealerweise in- oder gegeneinander gedrückt werden. Möglicherweise haften die Filamente auch lediglich durch Adhäsionskräfte aneinander.

Auch ist es denkbar, dass ergänzende Klebemittel, wie beispielsweise Kontaktkleber, flüssige oder feste Klebestoffe, Flussmittel, Schweißstoffe oder Lote, zur Anwendung kommen und diese gemeinsam mit den vorstehend beschriebenen Mechanismen oder auch alleine die Filamente gegen ein unerwünschtes Lösen bzw. Ausfranzen schützen. Insbesondere können derartige Klebemittel auch durch die Werkzeuge aktivierbar ausgestaltet werden, was insbesondere bei Schmelz- oder Heißklebern, Loten bzw. bei Flussmitteln an sich für andere Anwendungsfälle bereits hinreichend bekannt ist.

Jedenfalls kann eine für Stents unter Umständen zwingend gewünschte Gelenkigkeit auch im Bereich der Trennstellen erhalten bleiben, da bei entsprechender Ausgestaltung der Verfahrensführung bevorzugt lediglich einzelne Filamente miteinander verbunden sind.

Für den vorliegenden thermischen Reißprozess wird auch ein Innenwerkzeug verwendet.

Der Metallgewebeschlauch wird innen und außen durch Werkzeuge eingespannt, wodurch der Effekt einer besonders guten Formstabilität hinsichtlich der abgetrennten Schlauchteile erzielt werden kann.

Bei einer geeignet ausgestalteten Verfahrensvariante kann es bereits ausreichen, wenn der Metallgewebeschlauch lediglich außen von Werkzeugen eines Werkzeugs eingespannt wird. Dies trifft besonders dann zu, wenn der Metallgewebeschlauch eine ausreichend hohe Eigensteifigkeit bzw. durch ein Außenwerkzeug zu bewerkstelligende Eigenstabilisierbarkeit mit sich bringt. Dieses kann durch eine geeignete Auswahl des Gewebes bzw. der Gewebestruktur, die beispielsweise durch eine radial von geeigneten Stellen auf das Gewebe wirkende Kraft zu einer Eigenstabilisierung des Gewebes führt, umgesetzt werden.

Hinsichtlich eines alternativ, aber etwas aufwändiger gestalteten Verfahrens kann der Metallgewebeschlauch im Bereich der Trennstelle auch flacher zusammengedrückt und währenddessen oder im Anschluss hieran im Sinne der vorliegenden Erfindung thermisch gerissen und anschließend wieder ausgeformt werden, wenn gewährleistet ist, dass dann bei einem thermischen Reißen der Metallgewebeschlauch sich nicht vollständig schließt bzw. etwaige, die Schlauchform verhindernde Verbindungen zwischen Filamenten nachträglich einfach und betriebssicher wieder getrennt werden können.

Um eine kostengünstige Herstellung des Metallgewebeschlauchs vorrichtungstechnisch vorteilhaft umzusetzen, ist des Weiteren eine Vorrichtung zum Durchtrennen eines Metallgewebeschlauchs vorgeschlagen, welche sich insbesondere durch zwei relativ zueinander verlagerbare Reißwerkzeuge, nämlich ein eingangsseitiges Reißwerkzeug und ein ausgangsseitiges Reißwerkzeug, sowie eine zwischen beiden Reißwerkzeugen wirksame Heizeinrichtung auszeichnet. Hierbei ermöglicht die zwischen den beiden Reißwerkzeugen wirksame Heizeinrichtung, den Metallgewebeschlauch zwischen den beiden Reißwerkzeugen thermisch zu belasten, so dass dann die beiden Reißwerkzeuge gezielt an der thermisch am meisten belasteten Stelle den Reißvorgang ansetzten können, indem sie voneinander entfernt werden.

Zudem kann durch den gewählten Vorrichtungsaufbau bei geeigneter Verfahrensführung ein besonders gleichmäßiger Trennvorgang an der Trennstelle ringsherum des Metallgewebeschlauchs erzielt werden. Ist die Verfahrensführung dann noch entsprechend darüber hinaus optimiert, können Schlauchteile bevorzugt mit abgerundeten Enden erzeugt werden.

Durch den vorliegend gewählten Vorrichtungsaufbau wird die Gewebestruktur des Metallgewebeschlauchs kaum negativ beeinträchtigt und es wird möglichst der Ursprungszustand dieser Gewebestruktur erhalten.

Eine Beeinträchtigung kann insbesondere vermieden werden, da die beiden Reißwerkzeuge als Schlauchklemmen ausgestaltet sind, wobei ggf. auch andere Reißwerkzeuge, wie beispielsweise durch Vakuumansaugung oder durch Magnetismus einen lösbare Halteverbindung zu dem Metallgewebeschlauch schaffende Reißwerkzeuge, zur Anwendung kommen können.

Mit der vorliegenden Vorrichtung kann zudem insbesondere das vorliegende Verfahren baulich einfach realisiert werden.

Die zwei relativ zueinander verlagerbaren Schlauchklemmen können nahezu beliebig ausgestaltet sein, solange sie Klemmbereiche aufweisen, welche den Metallgewebeschlauch von radial außen umgeben und umfangsseitig bevorzugt zumindest nahezu vollständig umgreifen.

Sind die Reißwerkzeuge entsprechend ausgebildet, kann es bei geeigneter Abstimmung der Klemmkräfte auf die Gewebestruktur des Metallgewebeschlauchs gelingen, Anpresskräfte von außen auf den Metallgewebeschlauch derart gleichmäßig aufzubringen, dass diese Anpresskräfte vollständig von den Wänden des Metallgewebeschlauchs aufgenommen werden können, wobei sich das Material der Wände hierbei verdichtet, ohne dass die Wände nach innen einfallen.

Bei geeigneter Verfahrensführung kann dies selbst noch bis nach dem eigentlichen Trennen durch das thermische Reißen gewährleistet werden.

Die vorliegende Vorrichtung kann baulich sehr einfach bereitgestellt werden, wenn die Heizeinrichtung zwei Elektroden umfasst, die mit einer Stromquelle verbindbar sind.

Hierbei können unterschiedlichste Stromquellen zum Einsatz kommen, beispielsweise eine gebäudeseitige Stromquelle oder eine anderweitig bereitgestellte Quelle für elektrische Energie.

Besonders zweckdienlich ist es, wenn die Elektroden in den Reißwerkzeugen vorgesehen sind. Hierdurch kann die Anzahl der Bauteile speziell in dem Bereich der eigentlichen Trennstelle gering gehalten werden, so dass die Vorrichtung speziell in diesem Bereich besonders kompakt bauen kann. Dieses ermöglicht insbesondere auch ein Durchtrennen sehr kleiner Metallgewebeschläuche in entsprechend wirtschaftlicher Weise.

Die eingesetzten Schlauchklemmen werden einfach realisiert, weil wenigstens eine Schlauchklemme ein Innen- und ein Außenwerkzeug umfasst. Mittels einer derartig formulierten Schlauchklemme kann eine sehr präzise Formhaltigkeit des Metallgewebeschlauchs bzw. der abgetrennten Schlauchteile gewährleistet werden, was insbesondere dann, wenn der zu durchtrennende Metallgewebeschlauch unter einer Klemmkraft von außen nicht ausreichend eigenstabil verbleibt, noch zu guten Trennresultaten führt.

Es versteht sich, dass andere Reißwerkzeuge vorteilhafterweise ebenso derart ausgestaltet sind, dass der jeweilige Metallgewebeschlauch während des thermischen Reißens seine Schlauchform weitestgehend beibehält, so dass insbesondere thermische Verfestigungen, wie sie nach dem thermischen Reißen im Bereich der thermisch belasteten Stelle auftreten, nicht zu einer wesentlichen Beeinträchtigung der Schlauchform führen.

Um den Metallgewebeschlauch während des Reißens möglichst formstabil halten zu können, ist es speziell hinsichtlich eines Metallgewebeschlauchs mit einer geringeren Festigkeit von Vorteil, wenn beide Schlauchklemmen ein Innen- und ein Außenwerkzeug umfassen. Vorzugsweise ist dann das Innenwerkzeug der eingangsseitigen Schlauchklemme ausgangsseitig gehalten, so dass baulich sehr einfach auch sehr lange Metallgewebeschläuche in gewünschter Weise konfektioniert werden können.

Eine weiterführende Ausführungsvariante sieht vor, dass die beiden Innenwerkzeuge starr miteinander verbunden sind, wodurch die Handhabung der Schlauchklemmen insgesamt vereinfacht werden kann. In der Verfahrensführung bedeutet dieses dann, dass der Metallgewebeschlauch über eines dieser Innenwerkzeuge, oder ggf. auch über beide dieser Innenwerkzeuge während des Reißens gleitet, was jedoch an sich die Struktur des Schlauches in der Regel nur unwesentlich beeinträchtigt. Sollte letzteres der Fall sein, ist es ohne weiteres möglich, auch die Innenwerkzeuge gegeneinander verlagerbar auszugestalten.

Um insbesondere ein durch das vorliegende Verfahren erzeugtes Schlauchteil, etwa zum Herstellen eines Stents oder dergleichen, mit einem geringen Verletzungspotential herzustellen, ist ferner ein Metallgewebeschlauch aus mehreren Metallfilamenten vorteilhaft, wobei wenigstens ein Metallfilament einen ballistisch angeformten Endbereich aufweist. Vorteilhafterweise sind hierdurch bereits durch das thermische Reißen abgerundete Enden an den getrennten Schlauchteilen möglichst einfach zu realisieren.

Der Begriff "ballistisch angeformter Endbereich" beschreibt im vorliegenden Zusammenhang einen parabelförmigen Endbereich, wie er durch ein Auseinanderziehen von Metall unter Wärmezufuhr bereitgestellt werden kann. In der Regel wird der ballistisch angeformte Endbereich sich parabelförmig bauchig bis zu einem Ende verringern, wobei das Ende jeweils entsprechend des konkreten Reißvorgangs sehr spitz ausgeformt oder aber eine Abrissfläche aufweisen kann. Aufgrund des an sich in letzter Konsequenz auf mikros- bzw. nanoskopischer Skala nicht unbedingt zur Gänze beherrschbaren Abrissvorgangs kann die Abrissfläche unregelmäßig ausgeformt sein. Es versteht sich auch, dass der ballistisch angeformte Endbereich oder der abgerundet angeformte Endbereich nicht zwingend über den gesamten Endbereich reichen muss, da auch Übergangsgebiete zwischen dem unversehrten Filament und dem durch das thermische Reißen beeinflussten Bereich sowie zu der Abrissfläche vorliegen können.

Weist der Endbereich eine ballistisch ausgeformte Basis und endenseitig eine Abrissfläche auf, können die Enden an den getrennten Schlauchteilen bei geeigneter Verfahrensführung allein schon durch das vorliegende thermische Reißen verjüngt oder abgerundet ausgebildet werden. Hierdurch kann auf weitere zeit- und kostenintensive Nachbearbeitungsschritte verzichtet werden, um diesbezügliche Eigenschaften kumuliert an den Endbereichen der getrennten Schlauchteile verwirklichen zu können.

Dadurch, dass die Filamente des Gewebeschlauchs in der Regel nicht unidirektional und nicht koaxial zur Schlauchausrichtung ausgerichtet sind, sind entsprechende Ausrichtungen der Endbereich und insbesondere entsprechende Asymmetrien der Endbereiche in Bezug auf die jeweilige Filamentachse häufig zu finden, was jedoch im Ergebnis unkritisch ist.

Insofern lässt sich durch eine geeignete Verfahrensführung beim thermischen Reißen, indem zunächst ein ballistischer Bereich erzeugt und dann gerissen wird, gewährleisten, dass die Enden der Filamente des Metallgewebeschlauchs keine oder nur sehr kleine und mithin unwesentliche Spitzen oder Kanten aufweisen, die einer aufwändigen Nachbearbeitung bedürfen.

Eine bevorzugte Ausführungsvariante hinsichtlich des Metallgewebeschlauchs sieht vor, dass an einem Schlauchende wenigstens zwei Filamente miteinander stoffschlüssig verbunden sind, so dass die Gefahr ausgeschlossen oder zumindest erheblich reduziert werden kann, dass einzelne Filamente sich an einer gerissenen Trennstelle unbeabsichtigt lösen und die Struktur des Metallgewebeschlauchs an dieser Stelle degeneriert.

Hierbei muss eine diesbezügliche Verbindung jedoch nicht zwingend unmittelbar an einem Ende der Filamente liegen, sondern eine im Sinne der Erfindung geeignete Verbindung kann genau so gut erst in einem gewissen Abstand zu einem Filamentende erfolgen.

So lässt sich beispielsweise definieren, dass ein Schlauchende die ersten vier Überschneidungen von Filamenten umfasst. Hierbei reicht es aus, wenn zumindest zwei der Filamente wenigstens an der weitest von der Abrissfläche entfernt angeordneten Überschneidung innerhalb des Schlauchendes miteinander verbunden sind, um degenarative Effekte wirkungsvoll zu vermeiden.

Eine ausreichende Verbindung kann bereits allein schon durch Adhäsionseffekte bewerkstelligt werden, wenn zwischen den in Wirkkontakt stehenden Filamenten genügend große Adhäsionskräfte wirken können. Dieses kann beispielsweise dadurch gezielt erreicht werden, dass wenigstens eines der jeweiligen Filamente im Bereich ihres Kontakts soweit anschmilzt, dass es sich an die Form des anderen Filaments anschmiegt, was naturgemäß auch gelingt, wenn beide Filamente entsprechend anschmelzen. Je nach konkreter Verfahrensführung kann dann bereits die thermische Belastung an dieser Stelle eingestellt werden, indem beispielsweise das thermische Reißen an andere Stelle bereits stattgefunden hat oder aber durch die erhöhte Kontaktfläche Kühlungseffekte wirksamer werden. Auf dieses Weise verbleibt eine Verbindungsstelle, die durch Adhäsionskräfte wirksam ist und nicht an einem Filamentende liegt.

Für eine robustere Verbindung ist vorzugsweise eine Diffusions- oder Schweißverbindung vorgesehen, wobei auch eine derartige Verbindung nicht zwingend an den Filamentenden sondern auch an Kontaktstellen der Filamenten untereinander, die weiter Innen im Bereich des Schlauchendes liegen, vorgesehen sein kann. Auch wird dann im Bereich eines Kontakts zwischen zwei Filamenten thermische Energie genutzt, um das Metall an diesen Stellen derart zu erhitzten, dass Diffusions- bzw. Schweißprozesse auftreten. Auch hier kann dieser Vorgang beendet werden, wenn an dieser oder an anderer Stelle thermisch gerissen wurde oder wenn durch die entstandene Verbindung die thermische Energie nicht mehr so gezielt eingebracht bzw. Kühlvorgänge wirksamer werden.

Zeichnet sich der Metallgewebeschlauch durch wenigstens zwei getrennte stoffschlüssige Verbindungen an einem Schlauchende aus, kann eine höhere Beweglichkeit an dem Schlauchende erzielt bzw. eine Beweglichkeit an dem Schlauchende, die an die Beweglichkeit im Zentrum des Metallgewebeschlauchs heranreicht, ermöglicht werden. Dies liegt insbesondere auch daran, dass die Filamente zumindest im Bereich der ersten vier Überschneidungen - aus Richtung der Abrissfläche gesehen - nicht zur Gänze miteinander verschmolzen sind, sondern trotz der stoffschlüssigen Verbindung untereinander zumindest bereichsweise auch unverbunden sind.

Beispielsweise kann eine derart spezifisch ausgebildete Verbindung dadurch realisiert werden, dass zwei Verbindungen von jeweils zwei verschiedenen Filamenten oder aber ein Filament, welches mit zwei verschiedenen Filamenten an verschiedenen Stellen verbunden ist, erzeugt werden.

Da der Metallgewebeschlauch und insbesondere auch die getrennten Schlauchteile vorzugsweise beidendig Schlauchenden aufweisen, welche durch thermisches Reißen erzeugt sind, können Enden hergestellt werden, welche einerseits weniger spitz bzw. scharfkantig sind und andererseits sich durch eine hohe Beweglichkeit bzw. Biegbarkeit aufweisen, so dass hieraus hergestellte Gegenstände sich hervorragend speziell für den Einsatz insbesondere an einem menschlichen Körper eignen.

Insofern ist die Verwendung eines Metallschlauchs als Stent vorgeschlagen, wie eingangs bereits erwähnt.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

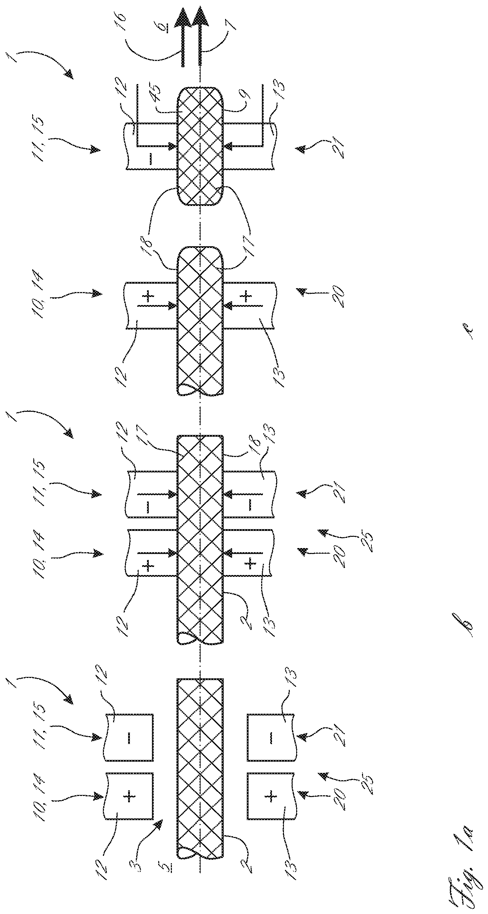

Weitere Vorteile, Ziele und Eigenschaften vorliegender Erfindung werden anhand nachfolgender Beschreibung von Ausführungsbeispielen erläutert, die insbesondere auch in anliegenden Zeichnungen dargestellt sind. In der ersten Figur (Figur1) ist das Verfahren dargestellt:
- Figur 1: schematisch eine Ansicht einer Vorrichtung zum thermischen Reißen eines Metallgewebeschlauchs in unterschiedlichen Arbeitsphasen;
- Figur 2: schematisch eine Detailansicht der Vorrichtung aus der Figur 1 mit einem zusätzlichen Innenwerkzeug zum thermischen Reißen eines alternativen Gewebeschlauchs
- Figur 3: eine alternative Vorrichtung zu der Vorrichtung nach Figur 2 in ähnlicher Darstellung wie Figur 2;
- Figur 4: schematisch eine Detailansicht eines thermisch gerissenen Endes 35 des Metallgewebeschlauchs 31; und
- Figur 5: verschiedene Filamentenden mit ballistisch angeformten Endbereichen in schematischer Perspektivansicht;
- Figur 6: einen ballistisch angeformten Endbereich in schematischer Seitenansicht; und
- Figur 7: einen weiteren ballistisch angeformten Endbereich in schematischer Seitenansicht.

In der Figur 1 ist bezüglich einer Vorrichtung 1 zum Durchtrennen eines Metallgewebeschlauchs 2 deren Arbeitsbereich 3 dargestellt. In dem Arbeitsbereich 3 ist eine Trennwerkzeugeinrichtung 4 der Vorrichtung 1 angeordnet, mittels welcher der Metallgewebeschlauch 2 thermisch gerissen werden kann. Nicht dargestellt sind eine Zufuhreinrichtung, mittels welcher zu konfektionierender Metallgewebeschlauch 2 der Trennwerkzeugeinrichtung 4 zugeführt werden kann, und eine Abführeinrichtung, mittels welcher die konfektionierten Metallgewebeschläuche 2 von der Trennwerkzeugeinrichtung 4 abgeführt werden können, da derartige Fördereinrichtungen für Metallgewebeschläuche an sich hinlänglich bekannt sind.

Durch diesen Arbeitsbereich 3 wird der Metallgewebeschlauch 2 als Halbzeug (nicht gesondert beziffert), um thermisch gerissen zu werden, von einer Eingangsseite 5 des Arbeitsbereichs 3 zu einer Ausgangsseite 6 des Arbeitsbereichs 3 sukzessive in eine Axialrichtung 7 hindurch geschoben, wobei der Metallgewebeschlauch 2 in diesem Arbeitsbereich 3 an einer Trennstelle 8 in einzelne vollständig voneinander getrennte Schlauchteile 9 thermisch gerissen wird.

Diese Trennwerkzeugeinrichtung 4 umfasst in diesem Ausführungsbeispiel zwei Reißwerkzeuge 10 und 11 mit jeweils einem Oberaußenwerkzeugteil 12 und einem Unteraußenwerkzeugteil 13, welche gemeinsam den Metallgewebeschlauch 2 von außen klemmen können, ohne das der Metallgewebeschlauch 2 während des Klemmens und thermischen Reißens kollabiert. Dies ist in diesem Ausführungsbeispiel möglich, da das Material des Metallgewebeschlauchs 2 derart eigensteif gewählt ist, dass es sich bei einer im Wesentlichen von außen wirkenden ringförmigen Kompression lediglich verdichtet, ohne hierbei aus seiner schlauchförmigen Gestalt auszubrechen.

Das erste Reißwerkzeug 10 mit seinem Oberaußenwerkzeugteil 12 und Unteraußenwerkzeugteil 13 befindet sich hierbei im Eingangsbereich 5, während sich das zweite Reißwerkzeug 11 mit seinem Oberaußenwerkzeugteil 12 und Unteraußenwerkzeugteil 13 - in Axialrichtung 7 gesehen - hinter dem ersten Reißwerkzeug 10 im Ausgangsbereich 6 angeordnet ist, wobei der Metallgewebeschlauch 2 zwischen den zwei Reißwerkzeugen 10 und 11 in Axialrichtung 7 geführt ist.

Zum Klemmen des Metallgewebeschlauchs 2 werden das jeweilige Oberaußenwerkzeug 12 und das jeweilige Unteraußenwerkzeug 13 radial zu der Axialrichtung 7 auf den Metallgewebeschlauch 2 zu bewegt.

Zum thermischen Reißen des Metallgewebeschlauchs 2 werden hierdurch die Reißwerkzeuge 10 und 11 derart an den Metallgewebeschlauch 2 angelegt, dass dieser ringsherum eingeklemmt ist.

Das Oberaußenwerkzeug 12 und das Unteraußenwerkzeug 13 bilden hierbei eine Schlauchklemme 14 bzw. 15, wobei die Vorrichtung 1 somit über eine eingangsseitige Schlauchklemme 14 und eine ausgangsseitige Schlauchklemme 15 verfügt.

Die Trennstelle 8 liegt zwischen der eingangsseitigen Schlauchklemme 14 und der ausgangsseitigen Schlauchklemme 15.

Zum thermischen Reißen kann die ausgangsseitige Schlauchklemme 15, also das zweite Reißwerkzeug 11, in Axialrichtung 7 von der eingangsseitigen Schlauchklemme 14, also dem ersten Reißwerkzeug 10, fortbewegt werden.

Insofern führt eine Bewegung des einen Reißwerkzeuges 11 in axialer Schlauchrichtung 16, welche in diesem Fall mit der Axialrichtung 7 fluchtet, relativ zum ersten Reißwerkzeug 10, durch Auseinanderziehen von Schlauchfilamenten 17 zum Trennen des Metallgewebeschlauchs 2 in Schlauchteile 9. So entsteht dann im Ergebnis eine Vielzahl an getrennten Schlauchteilen 9.

Um nun den Metallgewebeschlauch 2 zum thermischen Reißen zumindest im Bereich der Trennstelle 8 ausreichend erwärmen zu können, wird mithilfe der Reißwerkzeuge 10 und 11 elektrischer Strom in den Metallgewebeschlauch 2 eingeleitet, wobei dieser elektrische Strom insbesondere die Filamente 17 (nur exemplarisch beziffert) des Metallgewebes 18 des Metallgewebeschlauchs 3 durchfließt und hierbei zumindest teilweise in thermische Energie umgewandelt wird, wodurch der Metallgewebeschlauch 2 zumindest im Bereich der Trennstelle 8 erwärmt wird. Durch das Zuführen der elektrischen Energie wird das Material des Metallgewebeschlauchs 3 im Bereich zwischen den Reißwerkzeugen 10 und 11 in einen weicheren Zustand gebracht und kann hierdurch zielgerichtet thermisch gerissen werden.

Das eingangsseitige Reißwerkzeug 10 ist hierbei derart mit einer elektrischen Stromquelle (nicht gezeigt) wirkverbunden, dass das Oberaußenwerkzeug 12 und das Unteraußenwerkzeug 13 des Reißwerkzeugs 10 als Elektrode 20 wirken. Insofern ist das Reißwerkzeug 10 eine Elektrode 20, welche geeignet ist, den Metallgewebeschlauch 2 zu klemmen und zu erwärmen.

Gleiches gilt hinsichtlich des ausgangsseitigen Reißwerkzeugs 11, welches hierbei derart mit der elektrischen Stromquelle (nicht gezeigt) ebenfalls wirkverbunden ist, dass das Oberaußenwerkzeug 12 und das Unteraußenwerkzeug 13 des Reißwerkzeugs 11 als Elektrode 21 wirkt. Insofern ist das Reißwerkzeug 11 eine Elektrode 21, welche geeignet ist, den Metallgewebeschlauch 2 zu klemmen und zu erwärmen.

Es versteht sich, dass in abweichenden Ausführungsformen auch andere Werkzeuge oder Werkzeugteile oder auch separate Elektroden entsprechend zur Anwendung kommen können, ohne dass hierdurch von dem vorliegenden Grundgedanken des thermischen Reißens abgewichen wird. Ebensolches gilt auch für andere Arten von Erwärmung, wie beispielsweise durch Induktionsprozesse oder durch Schweiß- oder Lötflammen bzw. durch externe Heizungen.

Ebenso versteht es sich, dass statt der Schlauchklemmen 14, 15 auch andere Reißwerkzeuge 10, 11, die dementsprechend ein Reißen ermöglichen, zur Anwendung kommen können. Auch können die Schlauchklemmen selbst anders, beispielsweise drei- oder mehrteilig, aufgebaut sein.

Somit verfügt die Vorrichtung 1 über eine Heizeinrichtung 25, welche zumindest in dem Arbeitsbereich 3 konstruktiv einfach von den Reißwerkzeugen 11 und 12 ausgestaltet ist.

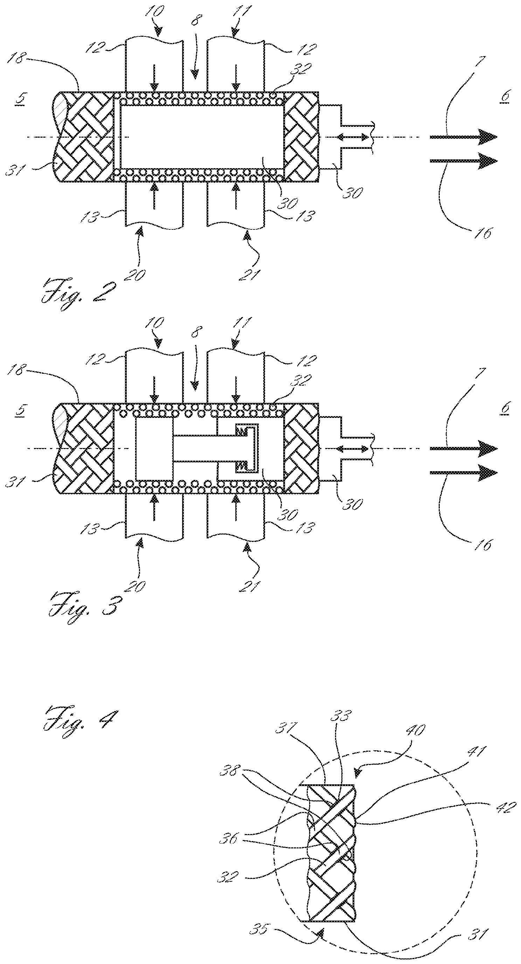

Während der Metallgewebeschlauch 2 - aufgrund seiner gewählten Eigensteifigkeit - gemäß der in der Figur 1 gezeigten Arbeitsphasen ausschließlich durch die Außenwerkzeuge 12 und 13 eingespannt wird bzw. ist, ist die Vorrichtung 1 gemäß der Darstellung nach der Figur 2 zusätzlich noch mit einem Innenwerkzeug 30 ausgerüstet, so dass auch Metallgewebeschläuche 31 mit einer weicheren Eigensteifigkeit problemlos mit der Vorrichtung 1 thermisch gerissen werden können. Der in der Figur 2 gezeigte Metallgewebeschlauch 31 besteht beispielsweise aus einer oder mehrerer Lagen von Filamenten 32, was allerdings auch für den Metallgewebeschlauch 2 gelten kann.

Insofern ist speziell die Trennwerkzeugeinrichtung 4 durch dieses Innenwerkzeug 30 ergänzt, wobei bei einer geeigneten Ausgestaltung der Trennwerkzeugeinrichtung 4 sowie des Metallgewebeschlauchs 31 auch ein zweigeteiltes Innenwerkzeug 30, wie dieses in Figur 3 dargestellt ist, oder auch separate Innenwerkzeuge vorsehen sein können.

So sind die beiden Teile des Innenwerkzeugs 30 nach Figur 3 gegen die Federkraft einer nicht separat bezifferten Feder axial gegeneinander verlagerbar, so dass das Innenwerkzeug 30 entsprechend dieses Ausführungsbeispiels ohne weiteres der Axialbewegung beim thermischen Reißen folgen kann. So die Klemmkräfte aufgehoben sind, kann sich die Feder wieder entspannen und ein neuer Reißvorgang gestartet werden. Es versteht sich, dass in abweichenden Ausführungsformen auch mehrere getrennte Innenwerkzeuge oder nur auf Höhe eines der Außenwerkzeuge ein innenwerkzeug vorgesehen sein kann.

Die Innenwerkzeuge 30 können unter anderem zur Innenführung des Metallgewebeschlauchs 31 und zur Energiezufuhr, oder zur Unterstützung des Trennprozesses genutzt werden.

Eine Bewegung des einen Reißwerkzeuges 11 in axialer Schlauchrichtung 16 relativ zum ersten Reißwerkzeug 10, führt auch bei diesen in Figuren 2 und 3 illustrierten Konstellationen durch Auseinanderziehen insbesondere der Filamente 17 zum Trennen des Metallgewebeschlauchs 31 in zwei Schlauchteile (nicht gesondert beziffert, vgl. Figur 1). So entsteht ein getrennter Schlauchteil. Die Energiezufuhr kann auch hierbei über die Reißwerkzeuge 10 und 11 geschehen, wie bereits hinsichtlich der Figur 1 dargestellt und beschrieben.

Jedenfalls können die mit der Vorrichtung 1 durchführbaren Verfahren, wobei es keine Rolle spielt, ob ein Innenwerkzeug 30 zusätzlich Verwendung findet oder nicht, derart ausgelegt sein, dass durch das Einbringen der thermischen Energie wenigstens zwei Filamente 17 bzw. 32 des Metallgewebeschlauchs 2 bzw. 31 aufgeschmolzen und hierbei an ihren Kontaktbereichen 33 (siehe beispielhaft Figur 3) vorzugsweise miteinander verschmelzen oder zumindest miteinander verbunden werden.

Wie mit dem in der Figur 3 dargestellten, vergrößerten Ausschnitt des bereits thermisch getrennten Endes 35 des Metallgewebeschlauchs 31 bzw. des rechten Schlauchendes 37 des Metallgewebeschlauchs 31 gut zu erkennen ist, sind die sich überkreuzenden Filamente 32 (17, Figur 1) in dem Bereich ihrer jeweiligen Überschneidungen 36 durch die Einbringung von thermischer Energie miteinander verschmolzen.

Insofern haben die Filamente 32 an dem Schlauchende 37 in dem Bereich der Überschneidungen 36 eine stoffschlüssige Verbindung 38, sind ansonsten aber voneinander getrennt, so dass insbesondere ein derartiges Schlauchende 37 sehr biegsam bleibt.

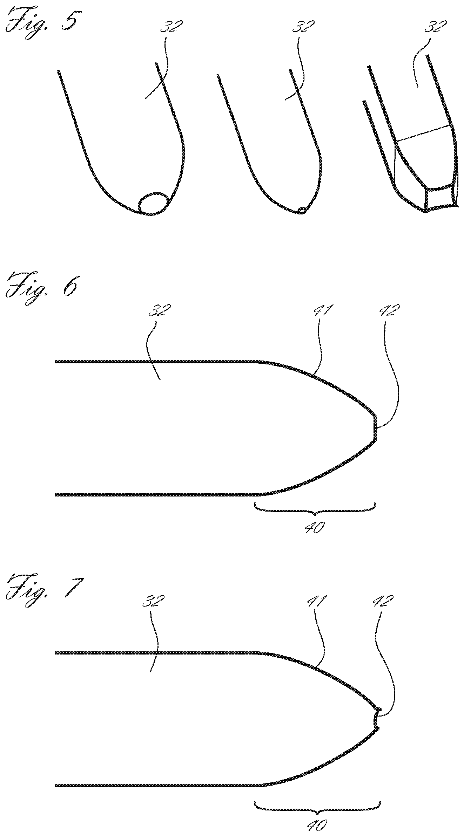

Darüber hinaus weisen die Filamente 32 jeweils einen ballistisch oder abgerundeten angeformten Endbereich 40 auf, wobei dieser Endbereich 40 eine ballistisch ausgeformte Basis 41 und endenseitig hiervon eine Abrissfläche 42 besitzt, wie schematisch in den Figuren 5 bis 7 dargestellt.

Hierbei besitzen die Filamente 32 eine abgerundete bzw. ballistische Endenform, welche durch den Trennvorgang beim Auseinanderfahren der Reißwerkzeuge 10 und 11 unter Energiezuführung erzeugt wird.

Unter ballistisch wird vorliegend eine im wesentlichen parabelförmige Endenform verstanden, welche insbesondere durch das Auseinanderziehen von Metall unter Wärmezuführung entsteht. Diese passt sich, wie in Figur 5 schematisch dargestellt, der jeweiligen Filamentform an und kann durch Abrissgeschwindigkeit, Temperatur und Temperaturverlauf beeinflusst werden. Wie unmittelbar nachvollziehbar, können auch Übergangsbereiche, insbesondere zu der Abrissfläche 42 aber auch zum Filament selbst, vorliegen, die von der ballistischen Form abweichen. Auch die Abrissfläche 42 kann relativ komplex ausgeformt sein, wie in Figur 7 schematisch angedeutet. Es versteht sich, dass die in den Figuren 5 bis 7 dargestellten Endbereiche 40 jeweils idealisiert sind, da die Filamente 32 in realiter in der Regel nicht koaxial zur Abrissrichtung ausgerichtet sein werden und mithin die Endbereiche 40 entsprechend abweichend in ihrem Winkel ausgebildet sein können.

Weiterhin kann bei dem hier beschriebenen Verfahren bewirkt werden, dass die Filamente 17 bzw. 32 an Punkten oder Flächen (Überscheidungen 36), an denen sich mehrere Filamente 17 bzw. 32 berühren, verkleben bzw. verschweißen.

Die durch die Vorrichtung 1 thermisch gerissenen Schlauchteile 9 eignen sich unabhängig von dem gewählten Aufbau der Trennwerkzeugeinrichtung 4 zur Verwendung als Stent 45.

An dieser Stelle sei explizit darauf hingewiesen, dass die Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können.

Es versteht sich, dass es sich bei den vorstehend erläuterten Ausführungsbeispielen lediglich um erste Ausgestaltungen der Erfindung handelt. Insofern beschränkt sich die Ausgestaltung der Erfindung nicht auf diese Ausführungsbeispiele.

**Bezugszeichenliste:**

| | | | |
|---|---|---|---|
| 1 | Vorrichtung zum Durchtrennen eines Metallgewebeschlauchs | 16 | axiale Schlauchrichtung |
| 2 | Metallgewebeschlauch | 17 | Filamente |
| 3 | Arbeitsbereich | 18 | Metallgewebe |
| 4 | Trennwerkzeugeinrichtung | 20 | Elektrode |
| 5 | Eingangsseite | 21 | Elektrode |
| 6 | Ausgangsseite | 25 | Heizeinrichtung |
| 7 | Axialrichtung | 30 | Innenwerkzeug |
| 8 | Trennstelle | 31 | Metallgewebeschlauch |
| 9 | Schlauchteile | 32 | Filamente |
| 10 | erstes bzw. eingangsseitiges Reißwerkzeug | 33 | Kontaktbereiche |
| 11 | zweites bzw. ausgangsseitiges | 35 | Ende |
| 12 | Reißwerkzeug | 36 | Überschneidung |
| 13 | Oberaußenwerkzeug | 37 | Schlauchende |
| 14 | Unteraußenwerkzeug | 38 | stoffschlüssige Verbindung |
| 15 | eingangsseitige Schlauchklemme | 40 | Endbereich |
| 15 | ausgangsseitige Schlauchklemme | 41 | Basis |
| | | 42 | Abrissfläche |
| | | 45 | Stent |

## Patentansprüche

1. Verfahren zum Durchtrennen eines Metallgewebeschlauchs (2; 31) an einer Trennstelle (8), **dadurch gekennzeichnet, dass** der Metallgewebeschlauch (2; 31) an der Trennstelle (8) thermisch gerissen wird.

2. Verfahren nach Anspruch 1, **dadurch gekennzeichnet, dass** die thermische Energie durch elektrischen Strom, der durch den Metallgewebeschlauch (2; 31) fliest, aufgebracht wird.

3. Verfahren nach Anspruch 2, **dadurch gekennzeichnet, dass** beidseits der Trennstelle (8) jeweils wenigstens eine Elektrode (20, 21) mit dem Metallgewebeschlauch (2; 31) in Kontakt gebracht und der Strom über die Elektroden (20, 21) durch den Metallgewebeschlauch (2; 31) geleitet wird.

4. Verfahren nach einem Ansprüche 1 bis 3, **dadurch gekennzeichnet, dass** im Bereich der Trennstelle (8) wenigstens zwei Filamente (16; 32) des Metallgewebeschlauchs (2; 31) aufgeschmolzen und miteinander verbunden, vorzugsweise miteinander verschmolzen, werden.

5. Verfahren nach einem der vorstehenden Ansprüche, **dadurch gekennzeichnet, dass** der Metallgewebeschlauch (2; 31) innen und außen durch Reißwerkzeuge (12, 13) und (30) eingespannt wird.

6. Vorrichtung (1) zum Durchtrennen eines Metallgewebeschlauchs (2; 31), umfassend zwei relativ zueinander verlagerbare, als Schlauchklemmen (14, 15) ausgestaltete Reißwerkzeuge (10, 11), ein eingangsseitiges Reißwerkzeug (10) und ein ausgangsseitiges Reißwerkzeug (11), sowie eine zwischen den Reißwerkzeugen (10, 11) wirksame Heizeinrichtung (25), **dadurch gekennzeichnet, dass** wenigstens eine Schlauchklemme (14, 15) ein Innen- und ein Außenwerkzeug (12, 13, 30) umfasst.

7. Vorrichtung (1) nach Anspruch 6, **dadurch gekennzeichnet, dass** die Heizeinrichtung (25) zwei Elektroden (20, 21) umfasst, die mit einer Stromquelle verbindbar sind.

8. Vorrichtung (1) nach Anspruch 6 oder 7, **dadurch gekennzeichnet, dass** die Elektroden (20, 21) in den Reißwerkzeugen (10, 11) vorgesehen sind.

9. Vorrichtung (1) nach einem der Ansprüche 6 bis 8, **dadurch gekennzeichnet, dass** 9. beide Schlauchklemmen (14, 15) ein Innen- und ein Außenwerkzeug (12, 13, 30) umfassen und das Innenwerkzeug (30) der eingangsseitigen Schlauchklemme (14) ausgangsseitig gehalten ist, wobei die beiden Innenwerkzeuge (30) starr miteinander verbunden sind.

10. Metallgewebeschlauch (2; 31) aus mehreren Metallfilamenten (17; 32), **dadurch gekennzeichnet, dass** wenigstens ein Metallfilament (17; 32) einen ballistisch angeformten Endbereich (37) und endenseitig eine Abrissfläche aufweist.

11. Metallgewebeschlauch (2; 31) nach Anspruch 10, **dadurch gekennzeichnet, dass** an einem Schlauchende (37) wenigstens zwei Filamente (17; 32) miteinander stoffschlüssig verbunden sind.

12. Metallgewebeschlauch (2; 31) nach Anspruch 11, **gekennzeichnet durch** wenigstens zwei getrennte stoffschlüssige Verbindungen (38) an einem Schlauchende (37).

13. Verwendung eines Metallgewebeschlauchs (2; 31) nach einem der Ansprüche 10 bis 12 als Stent (40).

## Claims

1. Method for severing a metal mesh tube (2; 31) at a separation point (8), **characterized in that** the metal mesh tube (2; 31) is torn thermally at the separation point (8) .

2. The method according to claim 1, **characterized in that** the thermal energy is furnished by electric current flowing through the metal mesh tube (2; 31).

3. The method according to claim 2, **characterized in that**, on either side of the separation point (8), respectively at least one electrode (20, 21) is contacted with the metal mesh tube (2; 31) and the current is conducted via the electrodes (20, 21) through the metal mesh tube (2; 31).

4. The method according to one of claims 1 to 3, **characterized in that**, in the area of the separation point (8), at least two filaments (16; 32) of the metal mesh tube (2; 31) are melted and joined together, preferably fused together.

5. The method according to one of the preceding claims, **characterized in that** the metal mesh tube (2; 31) is gripped internally and externally by tearing tools (12, 13) and (30) .

6. Device (1) for severing a metal mesh tube (2; 31), comprising two tearing tools (10, 11) that are movable in relation to one another and designed as tube clamps (14, 15), an input-side tearing tool (10) and an output-side tearing tool (11), as well as a heating device (25) active between the tearing tools (10, 11), **characterized in that** at least one tube clamp (14, 15) comprises an internal and an external tool (12, 13, 30) .

7. The device (1) according to claim 6, **characterized in that** the heating device (25) comprises two electrodes (20, 21) which can be connected to a source of current.

8. The device (1) according to claim 6 or 7, **characterized in that** the electrodes (20, 21) are provided in the tearing tools (10, 11).

9. The device (1) according to one of claims 6 to 8, **characterized in that** both tube clamps (14, 15) comprise an internal and an external tool (12, 13, 30) and the internal tool (30) of the input-side tube clamp (14) is held on the output side, wherein the two internal tools (30) are joined to one another in a rigid manner.

10. Metal mesh tube (2; 31) made of a plurality of metal filaments (17; 32), **characterized in that** at least one metal filament (17; 32) has a ballistically shaped terminal area (37) and a tearing surface on its end side.

11. The metal mesh tube (2; 31) according to claim 10, **characterized in that** at least two filaments (17; 32) are joined together in a materially bonded manner at a tube end (37).

12. The metal mesh tube (2; 31) according to claim 11, **characterized by** at least two separate materially bonded connections (38) at a tube end (37).

13. Use of a metal mesh tube (2; 31) according to one of claims 10 to 12 as a stent (40).

## Revendications

1. Procédé, destiné à sectionner un flexible métallique tissé (2 ; 31) sur un point de sectionnement (8), **caractérisé en ce qu'**on fissure par voie thermique le flexible métallique tissé (2 ; 31) sur le point de sectionnement (8).

2. Procédé selon la revendication 1, **caractérisé en ce qu'**on applique l'énergie thermique par un courant électrique qui circule à travers le flexible métallique tissé (2 ; 31).

3. Procédé selon la revendication 2, **caractérisé en ce que** de part et d'autre du point de sectionnement (8), on met en contact avec le flexible métallique tissé (2 ; 31) respectivement au moins une électrode (20, 21) et on fait passer le courant via les électrodes (20, 21) à travers le flexible métallique tissé (2 ; 31) .

4. Procédé selon l'une quelconque des revendications 1 à 3, **caractérisé en ce que** dans la région du point de sectionnement (8), on fait fondre et on relie l'un à l'autre, de préférence on fait fusionner l'un avec l'autre au moins deux filaments (16 ; 32) du flexible métallique tissé (2 ; 31).

5. Procédé selon l'une quelconque des revendications précédentes, **caractérisé en ce qu'**on enserre le flexible métallique tissé (2 ; 31) à l'intérieur et à l'extérieur dans des outils de fissurage (12, 13) et (30) .

6. Dispositif (1), destiné à sectionner un flexible métallique tissé (2 ; 31), comprenant deux outils de fissurage (10, 11) déplaçables l'un par rapport à l'autre, conçus sous la forme de colliers de serrage (14, 15), un outil de fissurage (10) du côté entrée et un outil de fissurage (11) du côté sortie, ainsi qu'un système de chauffage (25) agissant entre les outils de fissurage (10, 11), **caractérisé en ce qu'**au moins un collier de serrage (14, 15) comprend un outil intérieur ou un outil extérieur (12, 13, 30) t.

7. Dispositif (1) selon la revendication 6, **caractérisé en ce que** le système de chauffage (25) comprend deux électrodes (20, 21) qui sont susceptibles d'être reliées sur une source électrique.

8. Dispositif (1) selon la revendication 6 ou 7, **caractérisé en ce que** les électrodes (20, 21) sont prévues dans les outils de fissurage (10, 11).

9. Dispositif (1) selon l'une quelconque des revendications 6 à 8, **caractérisé en ce que** les deux colliers de serrage (14, 15) comprennent un outil intérieur et un outil extérieur (12, 13, 30) et **en ce que** l'outil intérieur (30) du collier de serrage (14) côté entrée est maintenu du côté sortie, les deux outils intérieurs (30) étant reliés l'un à l'autre de manière rigide.

10. Flexible métallique tissé (2 ; 31), constitué de plusieurs filaments métalliques (17 ; 32), **caractérisé en ce qu'**au moins un filament métallique (17 ; 32) comporte une zone d'extrémité (37) surmoulée par balistique et du côté extrémité, une surface d'arrachage.

11. Flexible métallique tissé (2 ; 31) selon la revendication 10, **caractérisé en ce que** sur une extrémité du flexible (37), au moins deux filaments (17 ; 32) sont reliés l'un à l'autre par matière.

12. Flexible métallique tissé (2 ; 31) selon la revendication 11, **caractérisé par** au moins deux liaisons (38) par matière séparées sur une extrémité du flexible (37).

13. Utilisation d'un flexible métallique tissé (2 ; 31) selon l'une quelconque des revendications 10 à 12 en tant que stent (40).
